Europäisches Patentamt

European Patent Office

Office européen des brevets

(19)

(11) Veröffentlichungsnummer : **0 373 323 B1**

(12) # EUROPÄISCHE PATENTSCHRIFT

(45) Veröffentlichungstag der Patentschrift :
**22.04.92 Patentblatt 92/17**

(21) Anmeldenummer : **89119322.9**

(22) Anmeldetag : **18.10.89**

(30) Priorität : **14.12.88 CH 4615/88**

(43) Veröffentlichungstag der Anmeldung :
**20.06.90 Patentblatt 90/25**

(45) Bekanntmachung des Hinweises auf die
Patenterteilung :
**22.04.92 Patentblatt 92/17**

(84) Benannte Vertragsstaaten :
**AT BE CH DE ES FR GB GR IT LI LU NL SE**

(56) Entgegenhaltungen :
**FR-A- 1 520 165**
**FR-A- 2 503 806**
**GB-A- 2 165 298**

(51) Int. Cl.⁵ : **F16B 5/10, F21V 17/00**

(54) **Einrichtung an einem Gegenstand, um zwei weitere Gegenstände daran lösbar zu befestigen, sowie Beleuchtungskörper mit einer solchen Einrichtung.**

(73) Patentinhaber : **KASPAR MOOS AG**
**Täschmattstrasse 27**
**CH-6015 Reussbühl (CH)**

(72) Erfinder : **Wismer, Viktor**
**Südstrasse 21**
**CH-6010 Kriens (CH)**

(74) Vertreter : **Patentanwälte Schaad, Balass &**
**Partner**
**Dufourstrasse 101 Postfach**
**CH-8034 Zürich (CH)**

EP 0 373 323 B1

## Beschreibung

Die Erfindung betrifft eine Einrichtung zum lösbaren Verbinden von einem Gegenstand, mit zwei weiteren Gegenständen. Die Erfindung betrifft ebenfalls einen Beleuchtungskörper mit einer solchen Einrichtung.

Die klassische lösbare Befestigung ist durch ein mit einem Gewinde versehenes Element gebildet, das mit einem gegengleichen Gewinde zusammenwirkt. Im allgemeinen ist sowohl zum Befestigen als auch zum Lösen einer solchen Schraubverbindung ein Werkzeug erforderlich. Es gibt aber auch ohne besondere Werkzeuge spannbare und lösbare Befestigungsvorrichtungen, etwa nach dem Prinzip des Bajonettverschlusses. Solche Befestigungsvorrichtungen siehe zum Beispiel FR-A-2 503 806 gestatten jedoch in der Regel lediglich zwei Gegenstände miteinander zu verbinden. Es ist daher eine Aufgabe der Erfindung, eine Einrichtung der genannten Art zu schaffen, mit welcher es möglich ist, ohne Zuhilfenahme eines Werkzeuges, an einen Gegenstand zwei weitere Gegenstände zu befestigen.

Diese Aufgabe wird durch die vorgeschlagene Einrichtung dadurch gelöst, dass sie die im Kennzeichen des Patentanspruches 1 umschriebenen Merkmale aufweist.

Merkmale bevorzugter Ausführungsformen sind in den abhängigen Ansprüchen umschrieben.

Ein Ausführungsbeispiel der Erfindung ist nachstehend anhand der Zeichnung näher erläutert. Es zeigt:

Fig. 1 im Schnitt eine montierte Einrichtung;

Fig. 2 im Schnitt den einen Bestandteil der Einrichtung in einem Schnitt längs der Linie II-II der Fig. 3;

Fig. 3 eine Draufsicht in Richtung des Pfeiles III der Fig. 2;

Fig. 4 einen Schnitt längs der Linie IV-IV der Fig. 2;

Fig. 5 einen Schnitt durch den anderen Bestandteil längs der Linie V-V der Fig. 6;

Fig. 6 eine Seitenansicht in Richtung des Pfeiles VI der Fig. 5; und

Fig. 7 in auseinandergezogener und perspektivischer Darstellung ein mit der vorgeschlagenen Einrichtung versehener Beleuchtungskörper.

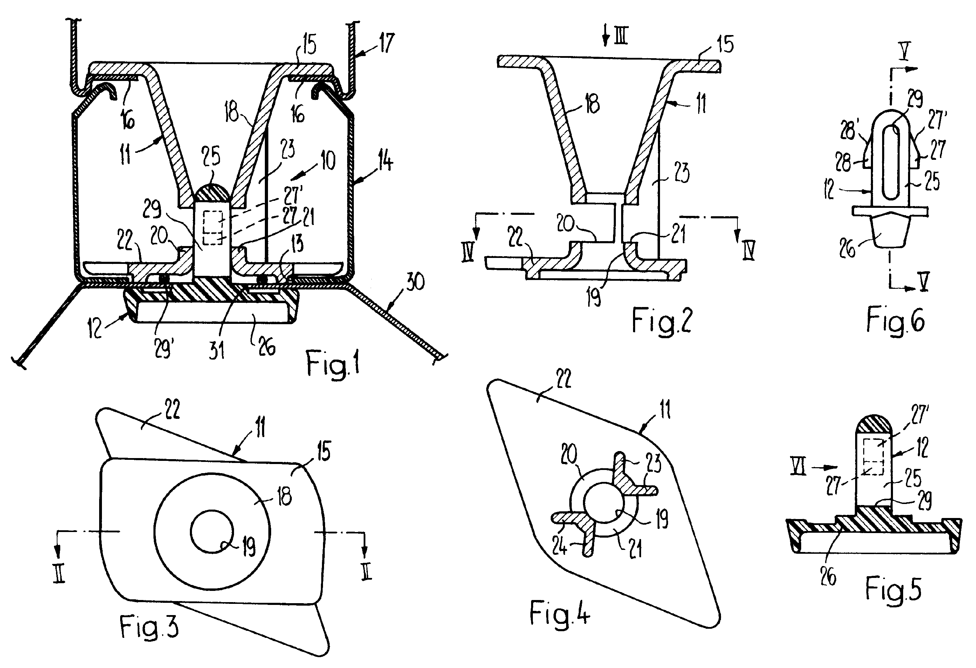

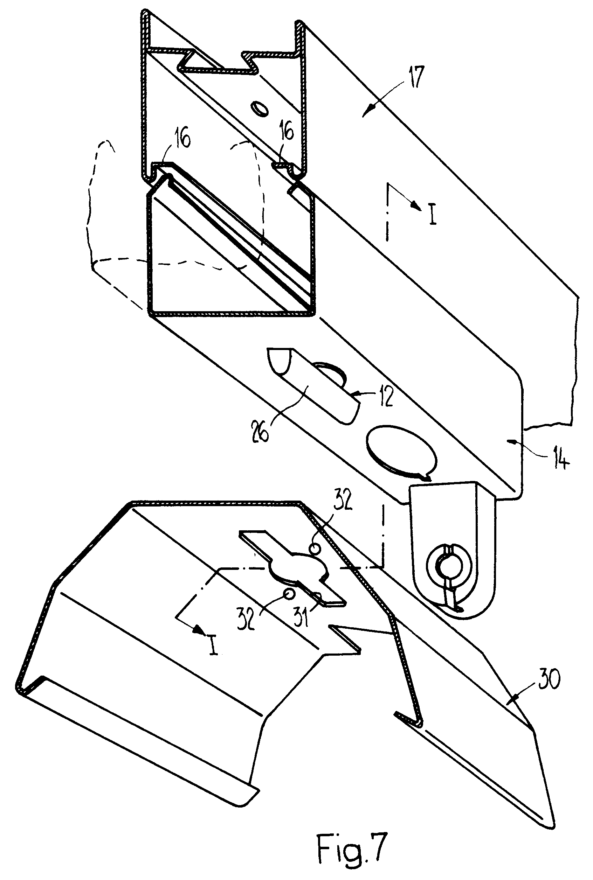

Zunächst sei auf die Fig. 1 bis 6 Bezug genommen. In Fig. 1 ist eine Befestigungseinrichtung 10 in montiertem Zustand dargestellt. Sie besteht aus zwei Bestandteilen 11,12, die mit einem noch zu beschreibenden Schnappverschluss miteinander verbunden sind und eine Öffnung 13 durchsetzen, die im Joch aus einem im wesentlichen U-förmig abgekanteten Blech einer Armatur 14 für eine Leuchtstofflampe ausgebildet ist. An dem in Fig. 1 oben er scheinenden Ende des Bestandteiles 11 ist ein Drehriegel 15 ausgebildet, der in Fig. 1 die nach innen umgebogenen Randflansche 16 einer Befestigungsschiene 17 hintergreift, welche (vergleiche Fig. 7) die Form eines U-förmig abgekanteten, zur Armatur 14 hin offenen Blechprofils hat. Der Fig. 3 ist zu entnehmen, dass der Drehriegel 15 die Form etwa eines Rechteckes mit verrundeten Ecken aufweist. An den Drehriegel 15 schliesst sich im Bestandteil 11 eine konische Vertiefung 18 an, die in eine durchgehende, zylindrische Bohrung 19 (Fig. 2,3,4) übergeht. Von dieser Bohrung 19 gehen in radialer Richtung zwei Schlitze 20,21 aus, welche sich (vergleiche Fig. 4) in Umfangsrichtung um etwas mehr als 90° erstrecken. Im Anschluss an die Bohrung 19 geht der Bestandteil 11 in einen etwa rautenförmigen Endflansch 22 über, dessen Abmessungen nach der lichten Weite im Inneren der Armatur 14 bemessen ist und damit mit seinen Enden Anschläge bildet, die die Verdrehbarkeit des Bestandteils 11 in der Armatur 14 begrenzen. Um dem Bestandteil ausreichende Festigkeit, namentlich auf der Höhe der Schlitze 20,21, zu verleihen, sind an diesen Rippen 23,24 angeformt, die, wie aus Fig. 4 hervorgeht, unmittelbar an das umfangsseitige Ende der Schlitze 20,21 anschliessen.

Der Bestandteil 12 besteht im wesentlichen aus einem Schaft 25, der sich (Fig. 1) in die Bohrung 19 hineinerstreckt und aus einem zugleich als Handhabe dienenden Drehriegel 26. An diametral einander gegenüberliegenden Seiten sind an der Aussenseite des Schaftes 25 Nocken 27,28 angeformt, die - wie aus Fig. 1 entnehmbar - sich durch die Schlitze 20,21 hindurcherstrecken. Jeder der Nocken 27,28 besitzt eine rampenartige Schrägfläche 27',28', die beim Zusammenbau der Bestandteile 11 und 12 zum Zuge kommen. Schliesslich ist im Schaft 25 des ganz aus Kunststoff bestehenden Bestandteiles 12 in einer zu der Ebene der Nocken 27,28 rechtwinkligen Ebene ein durchgehendes Langloch 29 ausgebildet. Dadurch ist der Schaft 25 beschränkt kompressibel.

Der Zusammenbau der Vorrichtung 10 mit der Armatur 14 ergibt sich sozusagen aus der vorstehenden Beschreibung. Der Bestandteil 11 wird unter Zwischenlage eines O-Ringes 29 (Fig. 1) von der offenen Seite der Armatur 14 in diese eingeführt, bis die Bohrung 19 etwa mit der Öffnung 13 fluchtet. Sodann wird der Bestandteil 12 von ausserhalb der Armatur 14 mit dem Schaft 25 voraus in die Bohrung 19 eingeführt und mit einem ruckartigen Kraftstoss soweit vorgeschoben, bis die Nocken 27,28 in die Schlitze 20,21 einschnappen. Damit ist die Befestigungsvorrichtung 10 in der Armatur 14 montiert und der O-Ring dient gewissermassen als Bremse, um die Verdrehung der Einrichtung etwas zu hemmen. Die Nocken 27,28 bilden mit den Schlitzen 20,21 nicht nur die Schnappverbindung, sondern auch eine in Drehrichtung wirkende Schleppverbindung, wobei die "Leerdrehung" dieser Schleppverbindung etwa 90° beträgt.

Nun kann durch Drehung von Hand des Drehriegels 26 der Drehriegel 15 so weit gedreht werden, bis dieser sich in die offene Seite der Befestigungsschiene 17 einführen lässt. Eine weitere Drehung um ca. 90° bringt den Drehriegel 15 in Verriegelungsstellung bezüglich der Befestigungsschiene 17. Dann (vergleiche Fig. 7) ist der Drehriegel 26 nach der Längsrichtung der Armatur 14 ausgerichtet. Nun kann ein Reflektor 30, der eine nach der Form des Drehriegels 26 nachgeformte, langgestreckte Öffnung 31 aufweist, über den Drehriegel 26 geschoben werden. Wird der Drehriegel 26 nun um 90° zurückverdreht, bis er an am Reflektor 30 vorhandene Anschläge 32 anstösst, ist auch der Reflektor 30 an der Armatur 14 verriegelt. In der beschriebenen Ausführungsform sind die Drehriegel 15 und 26 am einen Ende der durch die Schleppverbindung ermöglichten Verdrehung des Bestandteiles 12 inbezug auf den Bestandteil 11 nach derselben Richtung ausgerichtet. Am anderen Ende der durch die Schleppverbindung möglichen Verdrehung sind die Drehriegel 15 und 16 rechtwinklig zueinander gerichtet.


## Patentansprüche

1. Einrichtung zum lösbaren verbinden von einem Gegenstand (14), mit zwei weiteren Gegenständen (17,30), dadurch gekennzeichnet, dass die Einrichtung zwei Drehriegel (15,26) aufweist, von denen jeder dazu bestimmt ist, eine Öffnung (31) in einem der weiteren Gegenstände (17,30) zu hintergreifen, wobei die Drehriegel (15,26) über eine in ihrer Drehrichtung wirksame Schleppverbindung (20,21;27,28) aneinander gekoppelt sind.

2. Einrichtung nach Patentanspruch 1, dadurch gekennzeichnet, dass die Drehriegel (15,26) je an einem Bestandteil (11,12) vorgesehen sind, die mittels einer Schnappverbindung miteinander verbunden sind.

3. Einrichtung nach Patentanspruch 2, dadurch gekennzeichnet, dass der eine Bestandteil (12) einen quer zu seinem Drehriegel (26) gerichteten Schaft (25) aufweist, der in eine quer zum Drehriegel (15) des anderen Bestandteils (11) verlaufende, in diesem ausgebildete Bohrung (19) greift.

4. Einrichtung nach Patentanspruch 3, dadurch gekennzeichnet, dass an der Aussenseite des Schaftes (25) mindestens ein Nocken (27,28) angeformt ist, der in einen von der Bohrung (19) ausgehenden Schlitz (20,21) eingreift, wobei der Schlitz (20,21) und der Nocken (27,28) inbezug aufeinander so bemessen sind, dass die beiden Bestandteile (11,12) inbezug aufeinander begrenzt verdrehbar sind und damit die Schleppverbindung bilden.

5. Einrichtung nach Patentanspruch 4, dadurch gekennzeichnet, dass der eine Bestandteil (11) inbezug auf den anderen (12) in einer Richtung um 90° verdrehbar ist, bevor der eine und der andere Bestandteil in dieser Richtung gemeinsam drehen.

6. Einrichtung nach einem der Patentansprüche 3 bis 5, dadurch gekennzeichnet, dass der Drehriegel (26) des einen Bestandteils (12) als Handhabe ausgebildet ist, um auch den Drehriegel (15) des anderen Bestandteiles (11) zu verdrehen.

7. Einrichtung nach einem der Patentansprüche 4 bis 6, dadurch gekennzeichnet, dass die Drehriegel (15,26) an einem Ende der gegenseitigen Verdrehbarkeit der Bestandteile (11,12) inbezug aufeinander im wesentlichen parallel zueinander gerichtet sind, am anderen Ende der gegenseitigen Verdrehbarkeit dagegen im wesentlichen rechtwinklig zueinander gerichtet sind.

8. Einrichtung nach Patentanspruch 4, dadurch gekennzeichnet, dass der Schaft (25) des einen Bestandteiles (12) bezüglich seines Durchmessers in der den Nocken (27,28) enthaltenden Axialebene elastisch kompressibel ist.

9. Einrichtung nach Patentanspruch 8, dadurch gekennzeichnet, dass der Nocken (27,28) eine schräg zur Achse des Schaftes (25) verlaufende Rampe (27′,28′) aufweist und zusammen mit dem von der Bohrung (19) ausgehenden Schlitz (20,21) des anderen Bestandteiles (11) die Schnappverbindung bildet, mit dem die beiden Bestandteile (11,12) miteinander verbunden sind.

10. Zum Betrieb mit wenigstens einer Fluoreszenzlampe bestimmter Beleuchtungskörper mit einer zum Einsetzen der Fluoreszenzlampe bestimmten Armatur (14) und wenigstens einer daran befestigten Einrichtung (10) gemäss einem der Patentansprüche 1 bis 9, dadurch gekennzeichnet, dass der eine Drehriegel (15) dazu bestimmt ist, nach innen gerichtete Randflansche (16) einer im Querschnitt U-förmigen Befestigungsschiene (17) zu hintergreifen, während mit dem anderen Drehriegel (26) ein Reflektor (30) an der Armatur (14) befestigt ist.


## Claims

1. Appliance for the detachable connection of an object (14) to two other objects (17, 30), characterised in that the appliance exhibits two spagnolets (15, 26), each of which is intended to back-grip an opening (31) in one of the other objects (17, 30), the spagnolets (15, 26) being linked to one another via a drag connection (20, 21; 27, 28) acting in its direction of rotation.

2. Appliance according to Claim 1, characterised in that the spagnolets (15, 26) are provided each on a constituent part (11, 12), these constituent parts being connected to each other by means of a snap connection.

3. Appliance according to Claim 2, characterised in that the one constituent part (12) exhibits a shaft (25) directed transversely to its spagnolet (26), which shaft engages into a borehole (19) running transversely with respect to the spagnolet (15) of the other constituent part (11) and formed in the latter.

4. Appliance according to Claim 3, characterised in that there is moulded onto the outside of the shaft (25) at least one cam (27, 28), which engages into a slot (20, 21) extending from the borehole (19), the slot (20, 21) and the cam (27, 28) being dimensioned in relation to each other such that the two constituent parts (11, 12) can be twisted, to a limited degree, in relation to each other and thereby form the drag connection.

5. Appliance according to Claim 4, characterised in that the one constituent part (11) can be twisted in one direction by 90° in relation to the other constituent part (12), before the one and the other constituent part rotate jointly in this direction.

6. Appliance according to one of Claims 3 to 5, characterised in that the spagnolet (26) of the one constituent part (12) is formed as a handle, in order also to be able to twist the spagnolet (15) of the other constituent part (11).

7. Appliance according to one of Claims 4 to 6, characterised in that, at one end of the reciprocal twistability of the constituent parts (11, 12) in relation to each other, the spagnolets (15, 26) are directed essentially parallel to each other, at the other end of the reciprocal twistability, on the other hand, are directed essentially at right-angles to each other.

8. Appliance according to Claim 4, characterised in that the shaft (25) of the one constituent part (12) is elastically compressible in relation to its diameter in the axial plane containing the cam (27, 28).

9. Appliance according to Claim 8, characterised in that the cam (27, 28) exhibits a ramp (27′, 28′) running obliquely to the axis of the shaft (25) and, together with the slot (20, 21), extending from the borehole (19), of the other constituent part (11), forms the snap connection, by which the two constituent parts (11, 12) are connected to each other.

10. For operation with at least one fluorescent lamp of certain lighting elements, having a fixture (14) intended for the insertion of the fluorescent lamp and at least one appliance (10) thereto secured according to one of Claims 1 to 9, characterised in that the one spagnolet (15) is intended to back-grip inwardly directed edge flanges (16) of a securing rail (17) which is U-shaped in cross-section, whilst, with the other spagnolet (26), a reflector (30) is secured to the fixture (14).

## Revendications

1. Dispositif pour monter de manière amovible un objet (14) sur deux autres objets (17, 30), **caractérisé en ce** que le dispositif comprend deux verrous tournants (15, 26) dont chacun est destiné à passer derrière une ouverture (31) ménagée dans l'un des autres objets (17, 30), les verrous tournants (15, 26) étant couplés par l'intermédiaire d'une liaison d'entraînement (20, 21; 27, 28) agissant dans leur sens de rotation.

2. Dispositif selon la revendication 1, caractérisé en ce que les verrous tournants (15, 26) sont prévus respectivement sur l'un des éléments (11, 12) qui sont réunis à l'aide d'un assemblage par enclenchement.

3. Dispositif selon la revendication 2, caractérisé en ce que l'un des éléments (12) comprend une tige (25) orientée tranversalement par rapport à son verrou tournant (26) laquelle s'engage dans un alésage (19) réalisé dans l'autre élément (11) et s'étendant perpendiculairement au verrou tournant (15) dudit élément.

4. Dispositif selon la revendication 3, caractérisé en ce que sur la surface extérieure de la tige (25) est conformée au moins une saillie (27, 28) qui s'engage dans une fente (20, 21) partant de l'alésage (19), les dimensions de la fente (20, 21) et de la saillie (27, 28) étant adapties de telle façon que les deux éléments (11, 12) peuvent être tournés de manière limitée l'un par rapport à l'autre et constituent ainsi une liaison d'entraînement.

5. Dispositif selon la revendication 4, caractérisé en ce que l'un des éléments (11) peut être tourné par rapport à l'autre (12) de 90° dans une direction avant que les deux éléments tournent ensemble dans la même direction.

6. Dispositif selon l'une des revendications 3 à 5, caractérisé en ce que le verrou tournant (26) de l'un des éléments (12) est conformé en manette pour faire tourner également le verrou tournant (15) de l'autre élément (11).

7. Dispositif selon l'une des revendications 4 à 6, caractérisé en ce que, dans l'une des positions de fin de course de la rotation mutuelle des éléments (11, 12), les verrous tournants (15, 26) sont sensiblement orientés parallèlement l'un par rapport à l'autre, alors que dans l'autre position de fin de course de la rotation mutuelle, ils sont sensiblement orientés perpendiculairement l'un par rapport à l'autre.

8. Dispositif selon la revendication 4, caractérisé en ce que, en ce qui concerne son diamètre, la tige (25) de l'un des éléments (12) peut être comprimée élastiquement dans le plan axial contenant la saillie (27, 28).

9. Dispositif selon la revendication 8, caractérisé en ce que la saillie (27, 28) présente une rampe (27', 28') s'étendant en oblique vers l'axe de la tige (25) et forme, conjointement avec la fente (20, 21) de l'autre élément (11) partant de l'alésage (19), l'assemblage par enclenchement par lequel les deux éléments (11, 12) sont couplés entre eux.

10. Appareil d'éclairage destiné à fonctionner avec au moins un tube fluorescent, comprenant un support réglette (14) destiné à la mise en place du tube fluorescent et au moins un dispositif (10) selon l'une des revendications 1 à 9 monté sur ledit support réglette, **caractérisé en ce** que l'un des verrous tournants (15) est destiné à passer derrière des brides latérales (16) dirigées vers l'intérieur d'un rail de fixation (17) avec une section transversale en U, tandis qu'avec l'autre verrou tournant (26), un réflecteur (30) est fixé sur le support réglette (14).

Fig.1

Fig.2

Fig.3

Fig.4

Fig.5

Fig.6

Fig.7